# EUROPÄISCHE PATENTSCHRIFT

(11) **EP 4 032 790 B1**
(45) Veröffentlichungstag und Bekanntmachung des Hinweises auf die Patenterteilung: **11.11.2026**
(21) Anmeldenummer: 22152447.3
(22) Anmeldetag: 20.01.2022
(51) Int. Cl.: B62J 7/08, B62J 7/04

(54) **ADAPTERSYSTEM ZUM LÖSBAREN ANKOPPELN VON ZUBEHÖR AN EINEM FAHRZEUG-GEPÄCKTRÄGER**
ADAPTER SYSTEM FOR DETACHABLY COUPLING ACCESSORIES TO A VEHICLE LUGGAGE RACK
SYSTÈME D'ADAPTATEUR PERMETTANT DE FIXER DE MANIÈRE DÉTACHABLE DES ACCESSOIRES À UN PORTE-BAGAGES DE VÉHICULE

(30) Priorität: 20.01.2021 DE 202021100270 U
(43) Veröffentlichungstag der Anmeldung: 27.07.2022
(73) Patentinhaber: ZEG Zweirad-Einkaufs-Genossenschaft eG, 50739 Köln (DE)
(72) Erfinder: Fiegl, Thomas, 64367 Mühltal (DE); Pohl, Achim, 64342 Seeheim-Jugenheim (DE)
(74) Vertreter: Patentanwälte Buschhoff Hennicke Althaus

(56) Entgegenhaltungen:
- CN-U- 204 452 691
- DE-A1- 102007 011 966
- US-A1- 2017 320 530
- US-B1- 10 065 698
- US-B1- 6 484 914

## Beschreibung

Die Erfindung betrifft ein Adaptersystem zum lösbaren Ankoppeln von Zubehör, wie insbesondere Taschen, Körbe oder Behälter, an einem Längsholme und Querholme aufweisenden Fahrzeug-Gepäckträger, insbesondere einem Fahrradgepäckträger, mit einer vorzugsweise lösbar an dem Zubehör befestigbaren Adapterplatte, die ein erstes Koppelelement zum Zusammenwirken mit einem Gepäckträger-Querholm und ein in Längsrichtung der Adapterplatte beabstandet zum ersten Koppelelement angeordnetes zweites Koppelelement zum Zusammenwirken mit einem anderen Gepäckträger-Querholm aufweist, wobei wenigstens eines der Koppelelemente zwischen einer Verriegelungsposition und einer Freigabeposition gegen die Rückstellkraft einer Spanneinrichtung bewegbar ist und beide Koppelelemente ausgelegt sind, die Adapterplatte an einem Fahrzeug-Gepäckträger gegen ungewolltes Entkoppeln zu sichern.

Die meisten Fahrräder weisen wenigstens einen Gepäckträger auf. Während früher entsprechende Gepäckträger nur mit einer Federklemme versehen waren, gibt es seit vielen Jahren zur Verbesserung des Komforts für den Nutzer Adaptersysteme, mit denen eine bessere Kopplung und Sicherung des Zubehörs an einem entsprechend passend ausgeführten Gepäckträger erzielt werden soll. Im Markt gängige Adaptersysteme zeigen beispielsweise die EP 0933290 A2 oder DE 10 2008 044 797 B4, wobei für diese Systeme ein speziell ausgebildeter Gepäckträger mit entsprechenden angepassten Vertiefungen an den die Querholme bildenden Traverse vorgesehen werden muss.

Ein gattungsgemäßes Adaptersystem ist aus der US 6 484 914 B1 bekannt.

Das Adaptersystem der DE202014010372U1 soll ermöglichen, dass die Adapterplatte senkrecht von oben auf das Gefache eines Gepäckträgers aufgesetzt wird, wobei durch eine mittels der Spanneinrichtung vorgespannte Riegeleinrichtung ein selbstständiges bzw. automatisches Verriegeln der Riegeleinrichtung und damit auch der Adapterplatte ermöglicht werden soll, um den Bedienkomfort zu erhöhen. Das Lösen der Riegeleinrichtung erfolgt über einen Druckstab, der mit einem Griffstück versehen ist und parallel zur Plattenebene verschiebbar ist, um die Riegeleinrichtung zu verschieben und ein Entkoppeln der Adapterplatte zu ermöglichen. Der Druckstab muss hierzu mehr als 50 % der Gesamtlänge der Adapterplatte untergreifen.

Aufgabe der Erfindung ist es, ein Adaptersystem mit einer Adapterplatte zu schaffen, die an unterschiedlichen Gepäckträgern mit Längs- und Querholmen ohne gesonderte, gepäckträgerseitige Vorrichtungen verwendet werden kann, die bedienerfreulich ist und eine sichere Ankopplung von Zubehör an Gepäckträgern ermöglicht.

Zur Lösung dieser Aufgabe wird mit der Erfindung vorgeschlagen, dass bei einem Adaptersystem mit Adapterplatte eines der Koppelelemente eine Positioniermulde mit Schwenklagerfunktion aufweist und zum partiellen Umfassen eines Gepäckträger-Querholms ausgebildet ist, wobei das andere Koppelelement mit einer randoffenen Riegelmulde zum partiellen Umfassen eines anderen Gepäckträger-Querholms versehen ist, wobei die Muldenöffnung von Positioniermulde und Riegelmulde schräg zueinander stehen bzw. schräg zueinander ausgerichtet sind.

Durch die erfindungsgemäße Ausgestaltung wird ermöglicht, dass ein mit der Adapterplatte versehenes Zubehör bei der Montage bzw. dem Ankoppeln an einen Gepäckträger mit seiner Positioniermulde an einem meist vorderen Querholme angesetzt wird, und die Verriegelung von dieser Position aus selbstständig durch eine Schwenkbewegung erfolgt. Der Benutzer erfährt also frühzeitig eine Gewichtsentlastung, sobald die Adapterplatte mit der Positioniermulde an dem Querholm anliegt bzw. diesen umfasst, und anschließend kann das Zubehör unter Ausnutzung der Gewichtskräfte in seine am Gepäckträger gegen ungewolltes Entkoppeln gesicherte Auflageposition auf dem Gepäckträger verschwenkt werden. Durch die randoffene Riegelmulde in Kombination mit der schrägen Anordnung der Mulden zueinander kann hierbei beim Ankoppeln ein selbstständiges bzw. automatisches Verschieben des zweiten Koppelelements in die Freigabeposition während der Schwenkbewegung erreicht werden, sobald die Riegelmulde bzw. ein die Riegelmulde aufweisender Abschnitt des beweglichen Koppelelements mit einem Querholm des Gepäckträgers in Kontakt gerät; die beim Ankoppeln und Verschieben selbstständig aufgebaute Rückstellkraft der Spanneinrichtung am beweglichen Koppelelement bewirkt, dass bei Erreichen der Endposition der Schwenkbewegung das bewegliche Koppelelement seine Verriegelungsposition wiederum selbstständig und automatisch einnimmt. Der Benutzer muss nur die Schwenkbewegung durchführen, sobald das eine der beiden Koppelelemente mit der randoffenen Positioniermulde an einem der Querholme angesetzt wurde.

Insbesondere bevorzugt ist, wenn die Muldenöffnung von Positioniermulde und Riegelmulde in einem Winkel zwischen 95° und 175° zueinander stehen, und vorzugsweise in einem Winkel von 140° ± 7° zueinander ausgerichtet verlaufen. Gemäß einer vorteilhaften Ausgestaltung kann die Positioniermulde den gekrümmten Grund einer schräg zur Längsrichtung verlaufenden Positioniernut bildet, die mit ihrem gewölbten Grund die Schwenklagerfunktion beim Montagevorgang der Adapterplatte an einem Gepäckträger übernimmt, wobei vorzugsweise die Positioniernut unterschiedlich lange Seitenschenkel aufweist und der näher an der Riegelmulde liegende Seitenschenkel einen Führungsschenkel zum Zusammenwirken mit einem Gepäckträger-Querholm bildet und länger ist als der weiter entfernt von der Riegelmulde liegende Seitenschenkel. Auch die Riegelmulde kann den Grund einer randoffenen Riegelnut bilden; vorzugsweise jedoch bildet die Riegelmulde eine 180° Öffnung bzw. einen Halbkreis, dessen Normale besonders vorteilhaft symmetrisch und parallel zur Längsrichtung ausgerichtet liegt.

Gemäß einer besonders bevorzugten Ausgestaltung ist die Riegelmulde an einem Nockenvorsprung am beweglichen Koppelelement ausgebildet und der Nockenvorsprung ist unterhalb der Riegelmulde mit einer schräg nach hinten abgewinkelt verlaufenden Stirnkante als Betätigungsfläche für das bewegliche Koppelelement beim Ankoppeln des Zubehörs versehen.

Zweckmäßigerweise weist die Adapterplatte jeweils wenigstens zwei parallel zueinander verlaufende und seitlich voneinander beabstandete Positioniermulden und zwei parallel zueinander ausgerichtete und seitlich voneinander beabstandete Riegelmulden auf, die vorzugsweise nur an ausreichend stabilen, zugleich aber dünnen Plattenstegen der Adapterplatte ausgebildet sind, wobei diese Plattenstege jeweils im Bereich der Positioniermulde und der Riegelmulde an der Adapterplatte ausgebildet sind. Die Adapterplatte kann insbesondere einen Korpus mit einem Grundrahmen aufweisen und die Positioniermulden sind an den Grundrahmen nach unten verlängernden Seitenflanken des Korpus ausgebildet, wobei diese Seitenflanken die vorgenannten Plattenstege bilden. Die Seitenflanken können mit ihren Unterkanten ein erstes Paar von Aufstandsfüßen bilden, wobei in Längsrichtung beanstandet von den Seitenflanken am Korpus zwei den Grundrahmen nach unten verlängernde Seiteneckstege als zweites Paar von Aufstandsfüßen ausgebildet sein können. Das zweite Paar von Aufstandsfüßen kann insbesondere an den Übergangsecken der Längsseiten in die Querseiten ausgebildet sein

Gemäß einer vorteilhaften Ausgestaltung weist die Adapterplatte einen Korpus mit einem Grundrahmen auf und die Spanneinrichtung bildet einen integralen Bestandteil des Korpus, wobei im Grundrahmen ein über die Spanneinrichtung mit dem Grundrahmen verbundener beweglicher Plattenabschnitt ausgebildet ist, welchem das bewegliche Koppelelement zugeordnet ist. Diese Ausgestaltung kann insbesondere dadurch erzielt werden, dass die Spanneinrichtung aus einer in den Korpus der Adapterplatte stoffschlüssig, insbesondere beim Urformen der Adapterplatte angeformten, integrierten nachgiebigen wabenartigen Blattfederstruktur oder Tellerfederanordnung mit geschlossenen Waben besteht, wobei vorzugsweise die Spanneinrichtung im Bereich der Mitte des Korpus der Adapterplatte angeordnet ist. Die wabenartigen Blattfederstruktur oder Tellerfederanordnung mit geschlossenen Waben sorgt für ein ausreichendes Verformungsvermögen, damit das bewegliche Koppelelement zwischen der Riegelposition und der Freigabeposition verschoben werden kann. Bei einer integral angeformten wabenartigen Blattfederstruktur oder Tellerfederanordnung mit geschlossenen Waben erhält die Adapterplatte zugleich ein äußerst ästhetisches Erscheinungsbild, und es besteht bei der Fertigung nur ein minimaler Montageaufwand. Die gesamte Adapterplatte ist bei dieser Ausgestaltung im wesentlichen einstückig.

Gemäß einer alternativen Ausgestaltung kann die Adapterplatte einen Korpus mit einem Grundrahmen aufweisen, und ein beweglicher, das bewegliche Koppelelement bildender Plattenabschnitt ist über die Spanneinrichtung mit dem Grundrahmen verbunden. Die Verbindung zwischen Grundrahmen und Plattenabschnitt bzw. beweglichem Koppelelement kann gemäß einer insbesondere vorteilhaften Ausgestaltung mittels ineinander passender Formschlussmittel am Grundrahmen einerseits und am Plattenabschnitt andererseits erzielt werden. Weiter vorzugsweise kann die Spanneinrichtung aus einer in den beweglichen Plattenabschnitt stoffschlüssig, insbesondere beim Urformen des Plattenabschnitts angeformten, integriert nachgiebigen wabenartigen Blattfederstruktur oder Tellerfederanordnung mit geschlossenen Waben bestehen, wobei vorzugsweise der Grundrahmen und der bewegliche Plattenabschnitt aus demselben Material bestehen können. Es wäre aber auch möglich, diese aus unterschiedlichen Materialien zu bilden. Auch hier sorgt die tellerfederartige bzw. blattfederartige Struktur mit den geschlossenen aber nachgiebigen Waben für ein ausreichendes Bewegungsspiel bzw. Positionsänderungsvermögen für das bewegliche Koppelelement, damit dieses zwischen seinen beiden Positionen bewegt werden kann, zugleich aber eine Rückstellkraft aufgebaut und gespeichert wird, um das bewegliche Koppelelement ohne äußere Einflüsse in die Riegelposition selbstständig zurückzuziehen.

Bei den verschiedenen vorgenannten Ausführungsvarianten ist besonders vorteilhaft, wenn der Korpus der Adapterplatte am Grundrahmen seitliche Führungsschlitze aufweist, und der bewegliche Plattenabschnitt ist mit in die Führungsschlitze einfassenden Führungselementen versehen, insbesondere mit Führungsstiften, die mit einer Stiftachse quer zur Längsausrichtung verlaufen. Das Einfassen und Führen der Führungsstifte in den Führungsschlitzen sorgt für zusätzliche Stabilität und verbessert die Handhabbarkeit und die Freigängigkeit der Bewegung des beweglichen Koppelelementes relativ zum Grundrahmen, der im Montagezustand positionsfest am Gepäckträger montiert ist.

Bei sämtlichen Ausgestaltungen kann der Korpus seitlich des Grundrahmens mit in Längsrichtung sich erstreckenden Flügelabschnitten als Auflageflächen an den Gepäckträger-Längsholmen versehen sein, wobei vorzugsweise jeweils mindestens ein Paar von Nasenvorsprüngen an beiden Flügelabschnitten ausgebildet ist und die einzelnen Nasenvorsprünge eines Paares in Längsrichtung voneinander beabstandet sind. Eine entsprechende Ausgestaltung ermöglicht, dass dieselbe Adapterplatte an unterschiedlich breiten Gepäckträgern eingesetzt werden kann. Insbesondere bei dieser Ausgestaltung ist vorteilhaft, wenn am Übergang des Grundrahmens in die Flügelabschnitte jeweils wenigstens ein Paar von Anlagenasen ausgebildet ist und die einzelnen Anlagenasen eines Paares in Längsrichtung voneinander beanstandet sind; alternativ oder zusätzlich könnte an der Unterseite der Flügelabschnitte zusätzlich zu jedem Nasenvorsprung eine Anlagenase ausgebildet ist, wobei vorzugsweise der Abstand zwischen Anlagenase und Nasenvorsprung an die Holmdicke von Gepäckträger-Längsholmen angepasst ist.

Um einen Diebstahlschutz bei einem erfindungsgemäßen Adaptersystem zu ermöglichen, kann dem beweglichen Koppelelement ein Schlossteil zugeordnet sein. Hierzu kann gemäß einer besonders vorteilhaften Ausgestaltung das Schlossteil ein verdrehbares Schließelement mit einem Schließnocken zum Unterfassen und/oder Hinterfassen eines Gepäckträger-Querholms oder eines Abschnitts am Grundrahmen der Adapterplatte aufweisen. Weiter vorzugsweise können der Schließnocken und das bewegliche Koppelelement zum Zusammenwirken mit demselben Gepäckträger-Querholm ausgelegt und angeordnet sind. Eine weitere Verbesserung des Bedienkomforts kann erreicht werden, wenn das bewegliche Koppelelement mit einem Griffteil verbunden oder versehen ist, welches stirnseitig in Längsrichtung über den Korpus des Grundrahmens hinausragt und ein Zugelement für das bewegliche Koppelelement bildet. Ein als Zugelement ausgebildetes Griffteil kann eine relativ kurze Länge erhalten, insbesondere wenn es derart positioniert wird, dass es bezogen auf die Fahrtrichtung eines Fahrrades von hinten bedient werden kann. Je kürzer das Griffteil baut, desto geringer ist das Gesamtgewicht der Adapterplatte.

Eine weitere Ausgestaltungsvariante für das bewegliche Koppelelement kann vorsehen, dass dieses längsverschieblich am Korpus der Adapterplatte geführt ist und zwischen dem Grundrahmen und dem beweglichen Koppelelement wenigstens eine Druckfeder als Spanneinrichtung angeordnet ist, wobei vorzugsweise die Druckfeder auf einem Befestigungsschaft geführt ist, mit welchem zugleich ein Griffteil mit dem beweglichen Koppelelement bewegungsfest verbunden ist.

Das Adaptersystem ist insbesondere für Gepäckträger geeignet und auch einsetzbar, bei welchen die Gepäckträger-Querholme aus Rundstäben bestehen, und/oder bei welchen die Gepäckträger-Längsholme aus Rundstäben bestehen. Entsprechende Gepäckträgersysteme aus Rundstäben lassen sich besonders kostengünstig produzieren. Bei geeigneter Ausgestaltung kann die Adapterplatte dann sowohl an einem ersten Fahrzeug-Gepäckträger mit einem Abstand A zwischen den Gepäckträger-Längsholmen als auch an einem zweiten Fahrzeug-Gepäckträger mit einem Abstand B zwischen den Gepäckträger-Längsholmen angekoppelt und montiert werden, und der Abstand B kann insbesondere um mehr als 20 mm größer sein als der Abstand A, und vorzugsweise kann der Abstand um 24 mm größer sein als der Abstand A.

Weitere Vorteile und Ausgestaltungen eines erfindungsgemäßen Adaptersystems, und insbesondere einer Adapterplatte für ein solches Adaptersystem, ergeben sich aus der nachfolgenden Beschreibung von in der Zeichnung gezeigten Ausführungsbeispielen. In der Zeichnung zeigen:
- **FIG 1**: in perspektivische Ansicht schräg seitlich von oben eine erfindungsgemäße Adapterplatte gemäß einer ersten Ausführungsvariante;
- **FIG 2**: in perspektivische Ansicht die Unterseite der Adapterplatte aus Fig. 1;
- **FIG 3**: eine Seitenansicht der Stirnseite der Adapterplatte aus Fig. 1 von rechts mit Blick auf das Griffteil;
- **FIG 4**: eine Seitenansicht der anderen Stirnseite der Adapterplatte aus Fig. 1;
- **FIG 5A**: den Montagevorgang der erfindungsgemäße Adapterplatte an einem Gepäckträger zu Anfang der Montage bzw. des Ankoppelvorgangs, teilweise in Schnittansicht;
- **FIG 5B**: einen Zwischenzustand beim Ankoppelvorgang der Adapterplatte am Gepäckträger;
- **FIG 5C**: den Endzustand beim Ankoppelvorgang der Adapterplatte und die Riegelposition der Adapterplatte am Gepäckträger;
- **FIG 6**: schematisch eine Adapterplatte im Montagezustand an einem eine Federklemme aufweisenden Gepäckträger in Seitenansicht;
- **FIG 7**: schematisch die Befestigungsmöglichkeiten für eine Adapterplatte an unterschiedlichen Gepäckträgern; und
- **FIG 8**: in perspektivische Ansicht die Unterseite einer Adapterplatte gemäß einer alternativen Ausführungsvariante.

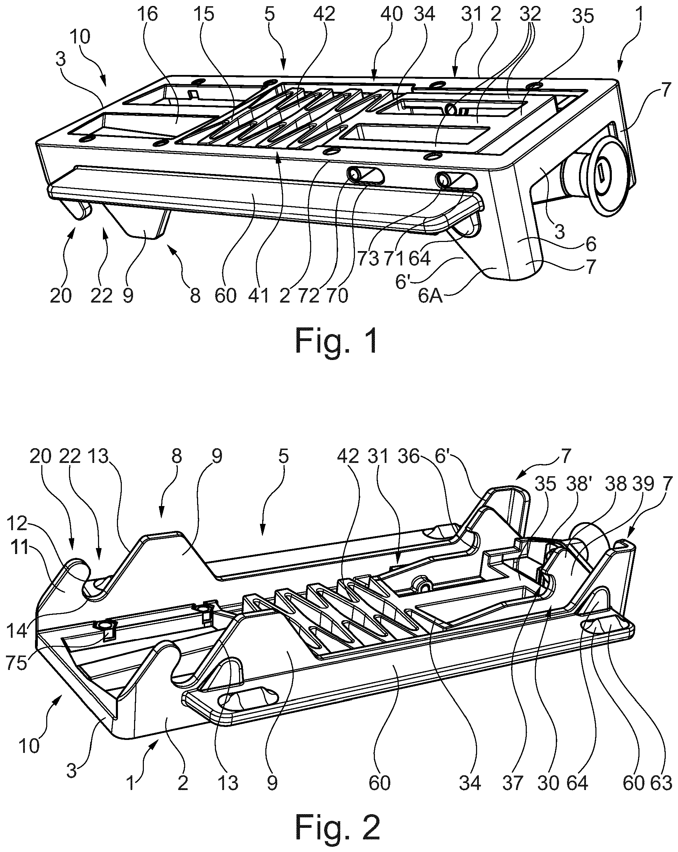

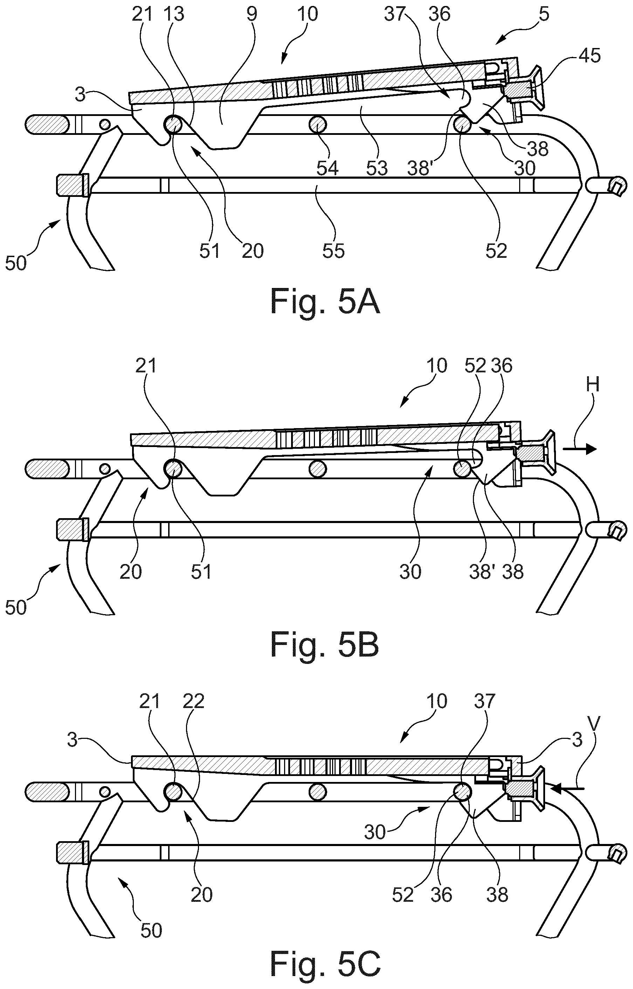

In den **Fig. 1-5** ist insgesamt mit Bezugszeichen 10 eine erfindungsgemäße Adapterplatte zur Befestigung an einem nur in den **Fig. 5A, 5B, 5C** angedeuteten Gepäckträger 50 eines Fahrrades oder Elektrofahrrades bezeichnet. Die Adapterplatte 10 weist einen Korpus 5 mit einem hier rechteckigen, biegesteifen Grundrahmen 1 mit zwei Längsseiten 2 und zwei Querseiten 3 auf, mit welchen die Auflagefläche und Befestigungsfläche für ein Zubehörteil wie beispielsweise eine Tasche oder einen Korb (nicht dargestellt) gebildet wird. Für die Befestigung des Zubehörs sind im gezeigten Ausführungsbeispiel in den beiden Längsseiten 2 jeweils vier Befestigungslöcher 4 angeordnet, wobei jeweils zwei der Befestigungslöcher 4 einander gegenüberliegen. Die Befestigungslöcher 4 können nur Durchgangslöcher bilden oder mit integrierten Gewindegängen versehen sein, oder den Befestigungslöchern sind Gewindebuchsen 75 beispielsweise aus Metall zugeordnet, wie gut aus Figur 2 ersichtlich. An den Übergangsecken der in den Fig. 1 und 2 rechten Querseite 3 in die jeweilige Längsseite 2 ist jeweils ein Seitenecksteg 6 ausgebildet, der den eigentlichen Grundrahmen 1 nach unten verlängert und für den Korpus 5 bzw. die Adapterplatte 10 zugleich ein erstes Paar von Aufstandsfüßen 7 bildet. Jeder Seitenecksteg 6 erstreckt sich an der zugehörigen Ecke über einen kleinen Teilabschnitt an der Querseite 3 und über einen längeren Teilabschnitt an der Längsseite 2, wobei die Teilabschnitte über die Ecke miteinander verbunden sind, um eine ausreichend hohe Stabilität zu gewährleisten und zugleich den Grundrahmen 1 zusätzlich auszusteifen. Zwischen den Teilabschnitten der Seiteneckstege 6 verbleibt an bzw. unterhalb der Querseite 3 eine rechteckige Öffnung. Der Teilabschnitt 6A der Seiteneckstege 6 in Verlängerung der bzw. parallel zu den Längsseiten 2 des Grundrahmens 1 verläuft an der der anderen, entfernteren Querseite 3 zugewandt liegenden Stirnkante 6' schräg nach oben. Ein weiteres Paar von Aufstandsfüßen 8 wird mittels zwei trapezförmigen Seitenflanken 9 gebildet, welche nur partiell eine Verlängerung der Längsseiten 2 der Adapterplatte 1 bilden und parallel zu den Längsseiten 2 beanstandet von der anderen Querseite 3 positioniert sind. Die Seiteneckstege 6 und die Seitenflanken 9 haben nur eine relativ geringe Stegdicke bzw. Plattendicke von deutlich unter 1 cm, bei geeignetem Material sogar kleiner als 0,5 cm.

Die Adapterplatte 10 ist dazu vorgesehen, ein mit der Adapterplatte 10 vorzugsweise lösbar befestigtes Zubehör an einem Gepäckträger 50 eines Fahrzeugs wie insbesondere eines Zweirads, schnell und einfach zu montieren, wobei ausschließlich die Adapterplatte 10 an dem Gepäckträger angekoppelt wird. An die notwendigerweise passende Gestaltung des Gepäckträgers 50 bestehen nur insoweit Anforderungen, als dieser zumindest zwei Querholme 51,52 (Figur 5A-5C) in einem für die Adapterplatte 10 passend vorgegebenen Abstand aufweisen muss, und die Längsausdehnung der Adapterplatte muss zumindest diesen Abstand in Längsrichtung überbrücken können. Die Querholme 51, 52 selbst können insbesondere aus Rundstäben bestehen.

Damit die Adapterplatte 10 mit entsprechenden Querholmen (51,52) eines Gepäckträgers gekoppelt und zugleich an dem Gepäckträger gegen ungewolltes Entkoppeln arretiert und gesichert werden kann, weist die Adapterplatte 10 ein erstes Koppelelement 20 und ein relativ zum ersten Koppelelement 20 bewegliches zweites Koppelelement 30 auf. Das erste Koppelelement 20 ist nahe der linken Querseite 3 positioniert und wird mittels einer Positioniermulde 21 gebildet, die jeweils unterhalb der beiden Längsseiten 2 zwischen den die Aufstandsfüße 8 bildenden Seitenflanken 9 sowie einem sich von der Ecke der linken Querseite 3 aus schräg nach vorne und unten erstreckenden Stegschenkel 11 ausgebildet ist. Tatsächlich sind es zwei Positioniermulde 21, die fluchtend zueinander und unterhalb der Längsseiten 2 zwischen den Seitenflanken 9 und den Stegschenkeln 11 ausgebildet sind. Genau genommen bildet jede der beiden Positioniermulden 21 den gekrümmten, halbkreisförmigen Grund 14 einer schräg zur Längsrichtung des Grundrahmens 1 bzw. Korpus 5 verlaufenden Positioniernut 22, die von einem kurzen Seitenschenkel 12 an der Flanke des Stegschenkels 11 und einem längeren Seitenschenkel 13 an der dem Stegschenkel 11 gegenüberliegenden Seitenflanke 9 begrenzt wird. Die Normale auf den halbkreisförmigen Grund 14 fällt mit der Längsachse der Positioniernut 22 zusammen und verläuft bezogen auf die Längsrichtung der Adapterplatte 10 schräg. Wie noch gezeigt und erläutert werden wird, bildet der längere Seitenschenkel 13 an der dem Stegschenkel 11 zugewandt liegenden Kante der Seitenflanke 9 zugleich einen Führungsschenkel während der Montage bzw. beim Ankoppeln der Adapterplatte 10.

Das andere, hier bewegliche Koppelelement 30 wiederum ist nahe der anderen, in den Figuren 1 und 2 rechten Querseite 3 positioniert. Das Koppelelement 30 ist über eine ausreichende Länge in Längsrichtung der Adapterplatte 10, also parallel zur Erstreckungsrichtung der Längsseiten 2, innerhalb des Grundrahmens 1 beweglich. Das bewegliche Koppelelement 30 hat hierzu einen im Innern und in der Ebene des Grundrahmens 1 angeordneten beweglichen, in sich biegesteifen Plattenabschnitt 31, im dargestellten Ausführungsbeispiel gebildet von drei Längsrippen 32 und zwei Querrippen 34, 35, die den Plattenabschnitts 31 trotz der Aussparungen zwischen den Rippen biegefest aussteifen, wobei die nahe der Querseite 3 angeordnete Querrippe 35 kräftiger ausgebildet ist als die hiervon entfernter liegende Querrippe 34. Die Querrippe 34 wiederum ist über eine Spanneinrichtung 40, die im Ausführungsbeispiel aus einer nachgiebigen wabenartigen Blattfederstruktur 41 oder Tellerfederanordnung mit geschlossenen Waben 42 besteht, mit einem Zwischensteg 15 am Grundrahmen 1 verbunden, wobei dieser Zwischensteg 15 ortsfest relativ zur anderen Querseite 3 des Grundrahmens 1 liegt. Die Blattfederstruktur 41 bzw. wabenartige Tellerfederanordnung bildet aufgrund ihrer Struktur mehrere in Reihe angeordnete blattfederartige Waben 42, deren Formgebung und Dicke angepasst ist, dass sich Öffnungsweite jeder Wabe ändern kann. Die Blattfederstruktur 41 erstreckt sich zwar zwischen dem Plattenabschnitt 31 und der anderen Querseite 3, aber wie schon erwähnt nur bis zu einem Zwischensteg 15, welcher etwa auf einem Drittel der Länge der Längsausdehnung des Korpus 5 die beiden Längsseiten 2 des Grundrahmens 1 miteinander verbindet. Zwischen dem Zwischensteg 15 und der Querseite 3 ist noch ein weiterer Längssteg 16 als Bestandteil des Korpus 5 des Grundrahmens 1 angeordnet. Der Zwischensteg 15 ist hier näherungsweise auf der Höhe der vorderen Kanten der die Aufstandsfüße 8 bildenden Seitenflanken 9 positioniert.

Wie insbesondere aus **Fig. 1** ersichtlich ist, bilden auch die jeweiligen Längsrippen 16, 32, die Querrippen 34, 35 und der Zwischensteg 15 für ein Zubehör einen Teil der Auflagefläche, wobei allerdings zwischen den Oberseiten des Plattenteils 31, unterhalb dessen das bewegliche Koppelelement 30 angeordnet ist, bzw. den Oberseiten der das Plattenteil 31 bildenden Längsrippen 32 und Querrippen 34,35 und der Oberseite des Abschnitts, welcher die Waben 42 der Blattfederstruktur 41 bildet, vorzugsweise eine Höhendifferenz bzw. ein Rücksprung gegenüber den Oberseiten der Längsseiten 2 und Querseiten 3 des Grundrahmens ausgebildet sein kann, um eine günstige bzw. bessere Beweglichkeit des beweglichen Koppelelement 30 auch bei an der Adapterplatte 10 montiertem Zubehör zu gewährleisten. Für die Koppelung mit dem Gepäckträger ist an der insbesondere in **Fig. 2** gut zu erkennenden Unterseite des Plattenabschnitts 31, genau genommen unter dem Plattenabschnitt 31, eine Riegelmulde 36 ausgebildet, wobei die Riegelmulde 36 von dem Nutgrund einer Nutöffnung 37 gebildet wird, die an einem Nockenvorsprung 38 eines Wandstegabschnitts 39 ausgebildet ist. An der Unterseite des Plattenabschnitts 31 befinden sich zwei voneinander beanstandete Wandstegabschnitte 39, die jeweils eine Nutöffnung 37 an einem Nockenvorsprung 38 aufweisen, um eine Riegelmulde 36 zu bilden. Der Abstand der beiden Wandstegabschnitte 39 mit den Nockenvorsprüngen 38, an welchen die Riegelmulde 36 ausgebildet sind, ist kleiner als der Abstand zwischen den beiden Seitenflanken 9, angrenzend an welche die Positioniermulde 21 ausgebildet sind. Der Nockenvorsprung 38 des Wandstegabschnitte 39 hat eine annähernd dreieckige Grundform, wobei die Nutöffnung 37 randoffen ist und im Wesentlichen horizontal bzw. parallel zur Längserstreckung des Grundrahmens 1, wenn auch nach innen versetzt, verläuft.

In **Fig. 2****,** welche die Adapterplatte 10 von unten zeigt, ist gut zu erkennen, dass die an die Nutöffnung 37 angrenzende Stirnkante 38' des Nockenvorsprung 38 schräg abgewinkelt verläuft. Diese schräge Abwinklung sorgt, wie noch erläutert werden wird, beim Montagevorgang bzw. Ankoppelvorgang der Adapterplatte 10 für eine selbstständige Bewegung des beweglichen Koppelelement 30 mit der Riegelmulde 36 relativ zu der Positioniermulde 21 an dem anderen Koppelelement 20.

Es wird nun zuerst Bezug genommen auf die **Fig. 5A-5C****,** um die Wirkungsweise der Positioniermulde 21 am hier unbeweglichen Koppelelement 20 und der Riegelmulde 36 am beweglichen Koppelelement 30 beim Montagevorgang zu erläutern. Der Gepäckträger 50 in den **Fig. 5A-5C** besteht in an sich bekannter Weise aus zwei Längsholmen 53, wobei aufgrund der Schnittdarstellung nur einer der beiden Längsholmen 53 dargestellt ist, und mehreren Querholme 51,52, wobei vorrangig diese beiden Querholme 51, 52 mit der Adapterplatte 10 zusammenwirken, sowie gegebenenfalls weiteren Längsholmen 54, die sich an Positionen befinden, mit denen die Adapterplatte 10 nicht kollidiert. Die Querholme 51, 52, 54 steifen die Längsholme 53 zu einem Gepäckträger aus und bilden zusammen mit diesem in denen sich bekannter Weise ein Gefache. Der Gepäckträger 50 wiederum ist in geeigneter Weise an einem Fahrzeug (nicht gezeigt) wie insbesondere an einem Fahrrad befestigt, beispielsweise über nicht dargestellte Verlängerungen der Längsholmen 53, die gegebenenfalls bis zur Radachse eines Hinterrades reichen und dort zusammenlaufen. Im gezeigten Ausführungsbeispiel bestehen sowohl die Längsholmen 53 als auch sämtliche Querholme 51, 52, 54 aus Rundstäben, und am Gepäckträger 50 ist, tiefer liegend als die Längsholme 53, zusätzlich noch ein parallel zu den Längsholmen verlaufender Längsstab 55 befestigt, um gegebenenfalls seitlich des Gepäckträgers Taschen oder dergleichen mittels Hakenelementen anzuhängen. Für die Funktion und das Zusammenwirken mit der Adapterplatte 10 kommt es nur auf die beiden Querholme 51, 52 an, wobei deren Abstand für die Adapterplatte 10 passend sein muss. Beim Montagevorgang bzw. Ankoppelvorgang der im Normalfall mit einem Zubehör versehenen Adapterplatte 10 an dem Gepäckträger 50 wird die Adapterplatte 10 von oben aufgesetzt, und zwar zuerst im Bereich des vorderen Koppelelements 20. In der schematischen Darstellung in **Fig. 5A** umfasst die Positioniermulde 21 am Grund der Positioniernut 22 bereits den Querholm 51. Die Positioniermulde 21 des vorderen Koppelelements 20 befindet sich, wie schon erläutert, am halbkreisförmigen Grund 14 der Positioniernut 22 zwischen den Seitenflanken 9 und den Stegschenkeln 11. Bezogen auf die Fahrtrichtung liegt die Positioniermulde 21 nahe der vorderen Querseite 3 des Korpus 5 der Adapterplatte 10. Das Aufschieben der Adapterplatte 10 mit der Positioniernut 22 auf den zugehörigen Querholme 51 wird durch den langen Seitenschenkel 13 der Seitenflanke 9 sehr früh zu Beginn des Montagevorgangs unterstützt, selbst wenn der Benutzer diese miteinander zu verbindenden Elemente nicht sehen kann. Sobald die Adapterplatte mit dem Seitenschenkel 13 an dem Querholm 51 anliegt, kann die Adapterplatte 10 weiter nach unten abgesenkt werden, bis die Positioniermulde 21 am Grund der Positioniernut 22 am Querholm 51 anliegt und diesen partiell umfasst. Die Positioniermulde 21 bildet dann zugleich ein Schwenklager mit Schwenklagerfunktion, denn anschließend kann die Adapterplatte 10, während sie sich mit der Positioniermulde 21 am vorderen Querholm 51 abstützt, in einer Schwenkbewegung weiter abgesenkt werden, bis sie die Position, wie in **Fig. 5A** gezeigt, erreicht. In der in **Fig. 5A** gezeigten Position befindet sich die randoffene Riegelmulde 36 des beweglichen Koppelelements 30 oberhalb des in Fahrtrichtung hinteren Querholms 52, und die nach vorne bezogen auf die Fahrtrichtung weisende schräge Stirnkante 38' am Nocken 38 liegt an der hinteren Mantelfläche des Querholms 52 auf.

Wird ausgehend aus dieser Position die Adapterplatte 10 weiter nach unten verschwenkt, bewegt sich der Nockenvorsprung 38 mit der Riegelmulde 36 aufgrund des notwendigen Zusammenwirkens der Kante 38' mit der Umfangsfläche des Querholms 52 selbstständig entgegen der Fahrtrichtung, wie mit dem Pfeil H in **Fig. 5B** angedeutet. Die Bewegung des Nockens 38, welcher mit dem Plattenabschnitt (31) des beweglichen Koppelelements 30 starr verbunden ist, ist aufgrund der elastischen Nachgiebigkeit der Spanneinrichtung (40, **Fig. 1****)** ermöglicht, wobei gleichzeitig eine Rückstellkraft in der Spanneinrichtung aufgebaut wird. Bezogen auf die in **Fig. 1** gezeigte Blattfederstruktur 41 mit einem Paket von integral angeformten Waben 42 werden diese mithin geweitet bzw. geöffnet, wodurch zugleich eine Rückstellkraft aufgebaut wird. Da der Nocken 38 zusammen mit dem beweglichen Koppelelement 30 und dem einen Teil hiervon bilden Plattenabschnitt 31 nach hinten in Pfeilrichtung H verschoben wird, kann sich zugleich die Adapterplatte 10, wie dies gut in dem Schaubild **Fig. 5B** zu erkennen ist, mit ihrem hinteren Ende weiter nach unten bewegen, wohingegen die Positioniermulde 21 des Koppelelements 20, die ja das Schwenklager zum Führen dieser Abwärtsbewegung um den vorderen Querholm 51 bildet, in Kontakt bleibt mit dem vorderen Querholm 51 und ihre Position nicht ändert. Die weitere Abwärtsbewegung der Adapterplatte 10 bewirkt zugleich eine Verschiebung des beweglichen Koppelelements 30 in Pfeilrichtung H solange, wie die unterhalb der Riegelmulde 36 ausgebildete schräg verlaufende Stirnkante 38' noch in Kontakt ist mit der Umfangsfläche des hinteren Querholms 52 und an diesem entlangrutscht.

Die Länge der Stirnkante 38' des Nockenvorsprungs 38 ist vorzugsweise mindestens so lang wie die Höhe der Nutöffnung 37, an deren Grund die Riegelmulde 36 ausgebildet ist. Sobald die Abwärtsbewegung bzw. Schwenkbewegung so weit fortgeschritten ist, dass die Übergangsecke der Stirnkante 38' des Nockens 38 in die Nutöffnung 37 den hinteren Scheitel der Wölbung des Querholms 52 überschritten hat, setzt automatisch und selbstständig eine Verriegelung der Adapterplatte 10 am Gepäckträger 50 ein, denn aufgrund der in der Spanneinrichtung (40, Fig. 1) gespeicherten Rückstellkraft bewegt sich das bewegliche Koppelelement 30 in entgegengesetzter Richtung nach vorne, wie mit dem Pfeil V in **Fig. 5C** angedeutet. Bei dieser Vorwärtsbewegung senkt sich die Adapterplatte weiter ab, und die Riegelmulde 36 schiebt sich partiell um den Längsholm 52 herum und umfasst diesen, bis die in **Fig. 5C** gezeigte Lage erreicht ist. Die in **Fig. 5C** gezeigte Position des Nockens 38 mit der Riegelmulde 36, die eng und vorzugsweise auch noch mit einer Rest-Vorspannung am rückwärtigen Scheitel des hinteren Querholms 52 des Gepäckträgers 50 anliegt, bildet die Verriegelungsposition des beweglichen Koppelelements 30. Die in **Fig. 5B** gezeigte Position des Nockens 38 hinter dem hinteren Querholme 52 bildet die (minimale) Freigabeposition des beweglichen Koppelelements 30, wobei die Bewegungslänge für das bewegliche Koppelelement 30 vorzugsweise größer bzw. länger in Pfeilrichtung H ist als die in **Fig. 5B** gezeigte Position. Die **Fig. 5C** lässt zugleich gut erkennen, dass sowohl die Riegelmulde 36 als auch die Positioniermulde 21 jeweils einen der beiden Querholme 51,52 umfassen, allerdings in zueinander schräg stehenden Richtungen. Für den Winkel zwischen der Riegelmulde 36 und der Positioniermulde 21 besteht einige Gestaltungsfreiheit, denn diese können grundsätzlich einen Winkel zwischen 95° und 175° miteinander einschließen. Die Winkel der beiden Mulden 36, 21 entsprechend im Prinzip dem Winkel zwischen den normalen auf den Grund der jeweiligen Mulde 36,21 bzw. der Längsachse der jeweils in Verlängerung der Mulde ausgebildeten Nut. Im gezeigten Ausführungsbeispiel liegt der Winkel bei etwa 140°.

Aus der in **Fig. 5C** gezeigten Position kann sich die Adapterplatte nicht selbstständig lösen, denn die Positioniermulde 21 am vorderen Koppelelement verhindert jegliche vertikale Bewegungen der Adapterplatte 21 nahe der vorderen Querseite 3 relativ zum Gepäckträger 50, weil die Positioniernut 22 schräg zur Fahrtrichtung bzw. Längserstreckung der Adapterplatte 10 verläuft. Eine Bewegung des anderen Endes der Adapterplatte nahe der in Fahrtrichtung hinteren Querseite 3 wiederum wird mittels der Riegelmulde 36 am beweglichen Koppelelement 30 verhindert, wobei die Muldenöffnung 37, an deren Grund die Riegelmulde 36 ausgebildet ist, in Fahrtrichtung bzw. in Längserstreckung der Adapterplatte 10 weist. Die Muldenöffnung der Positioniermulde 21, die schräg nach unten weist, steht mithin zugleich schräg zur Muldenöffnung 37 der Riegelmulde 36, die in Fahrtrichtung bzw. nach vorne weist. Die Muldenöffnung 37 bzw. die Riegelmulde 36 bilden einen Halbkreis und erstrecken sich entsprechend über 180°.

Um die Adapterplatte 10 vom Gepäckträger 50 aus der Koppelposition, wie in **Fig. 5C** gezeigt, wieder lösen zu können, ist das bewegliche Koppelelement 30 zusätzlich mit einem Griffteil 45 starr verbunden, welches über die in Fahrtrichtung hintere Querseite 3 nach hinten frei vorkragt, um gut vom Nutzer gegriffen werden zu können. Der Griffteil 45 ist als Zugteil ausgebildet, an welchem gezogen werden muss. Nur dadurch, dass ein Nutzer am Griffteil 45 in Pfeilrichtung H, als entgegen der Pfeilrichtung V in **Fig. 5C****,** zieht, kann das bewegliche Koppelelement 30 soweit verschoben werden, dass ein Entkoppeln stattfinden kann, denn die vordere Ecke am Übergang des Nockens 38 in die Muldenöffnung 37 muss weiter zurückgezogen werden als der Scheitel des Querholms 52. Erst dann kann die Adapterplatte 10 nach oben geschwenkt werden, wobei auch beim Entkoppelvorgang die Positioniermulde 21 am vorderen Koppelelement 20 eine Schwenklagerfunktion übernimmt, was die Bewegung für den Nutzer selbst bei höheren Gewichten eines Zubehörs erleichtert.

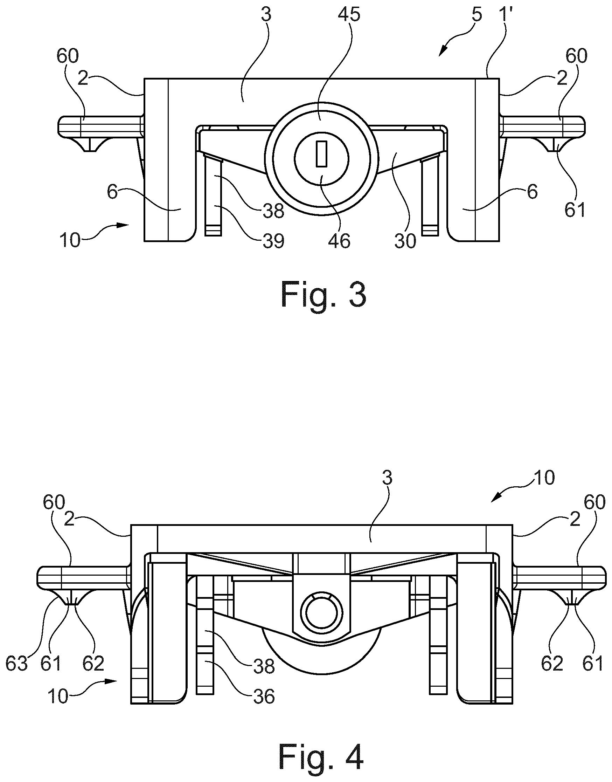

Es wird nun erneut zusätzlich Bezug genommen auf die **Fig. 1, Fig. 2** sowie die **Fig. 3** und **Fig. 3****.** Aus der Ansicht in **Fig. 3** ist das frei zwischen den Seiteneckstegen 6 und unterhalb der Querseite 3 vorkragende und mit dem beweglichen Koppelelement 30 starr verbundene Griffteil 45 gut zu erkennen. Ferner ist gut ersichtlich, dass die Riegelmulde 36 und die Nockenvorsprünge 38 an vergleichsweise dünnen Wandstegabschnitten 39 ausgebildet sind. Im Griffteil 45 lässt sich ein Schlossteil 46 mit Schlüsselaufnahme anordnen, um mit dem Schlüssel einen Schließnocken (nicht gezeigt) verdrehen zu können, der ausgelegt ist, im Schließzustand des Schlossteils 46 eine Bewegung des beweglichen Koppelelements 30 auf geeignete Weise zu verhindern. Hierzu kann der Schließnocken vorzugsweise mit demjenigen Querholm zusammenwirken, mit dem auch das bewegliche Koppelelement 30 zusammen wird. Der Schließnocken kann aber auch mit der Innenseite der Querseite 3 oberhalb des Griffteils 45 zusammenwirken, denn der Schließnocken muss nur eine Bewegung des beweglichen Koppelelements 30 aus der Riegelstellung verhindern, wenn die Adapterplatte 10 am Gepäckträger angekoppelt ist und das Schloss geschlossen ist.

Insbesondere die **Fig. 3** und **Fig. 4** lassen, zusammen mit den **Fig. 1** und **Fig. 2****,** gut erkennen, dass die Adapterplatte 10 außen am Grundrahmen 1 parallel zu den Längsseiten 2 jeweils einen Flügelabschnitt 60 aufweist, der von der Oberseite 1' des Grundrahmens 1 in der Höhe beanstandet liegt und horizontal seitlich von den Längsseiten 2 vorkragt. Mit den Seitenflügeln 60 kann sich die Adapterplatte 10 im Montagezustand zusätzlich noch von oben an den Längsholmen eines Gepäckträgers abstützen. An den, wiederum bezogen auf den Montagezustand, Unterseiten 60' weist jeder Flügelabschnitt in Längsrichtung voneinander beanstandet mindestens einen Nasenvorsprung 61 auf; jeder Nasenabschnitt hat gerundete innere Nasenflanken 62 an der den Längsseiten 2 zugewandt liegenden Flächen und gerundete äußere Nasenflanken 63 an den abgewandt liegenden Flächen. Die Nasenvorsprünge 61 dienen der seitlichen Fixierung einer montierten Adapterplatte 10, da sie dazu bestimmt sind, mit den jeweiligen Längsholmen (53, **Fig. 5****)** eines Gepäckträgers zusammenzuwirken, um ein seitliches Verschieben der Adapterplatte 10 aufgrund von Querkräften während der Fahrt zu verhindern.

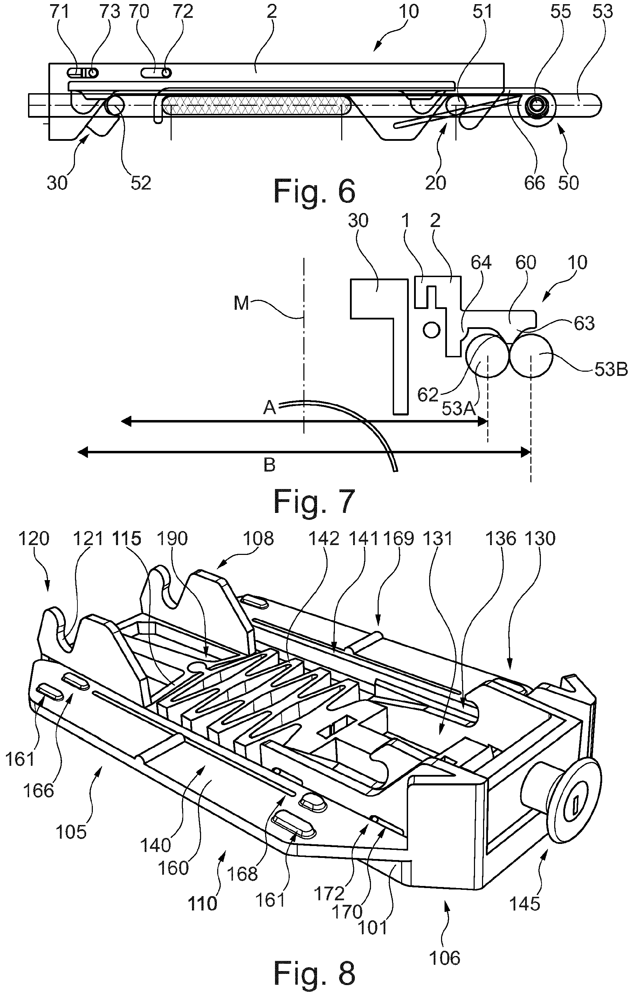

Dieses Zusammenwirken zeigt sich sehr deutlich in der schematischen Darstellung gemäß **Fig. 7****,** wobei in dieser Darstellung nur die rechte Hälfte eine Adapterplatte 10 stark schematisch vereinfacht angedeutet ist. Es ist jedoch gut zu erkennen, dass sich jeder der Nasenvorsprünge 61 an der Unterseite der Flügelabschnitte 60 entweder mit der inneren Nasenflanke 62 an einem Längsholmen 53A oder mit der äußeren Nasenflanke 63 an einem Längsholm 53B anlegen kann. Ein Gepäckträger hat normalerweise entweder zwei Längsholme 53A mit einem Abstand A bzw. A/2 zur Gepäckträgermitte M, oder zwei Längsholme 53B mit einem Abstand B zueinander bzw. B/2 zur Gepäckträgermitte M. Die erfindungsgemäße Adapterplatte 10 lässt sich jedoch an beiden Gepäckträgern sicher verankern und Seitenbewegungen quer zur Fahrtrichtung können mittels der Nasenvorsprünge 61 verhindert werden. Für die weiter innen liegenden Längsholme 53A kann zusätzlich an den äußeren Flächen des Korpus 5 des Grundrahmens 5 noch ein Nasenvorsprung 64 vorgesehen sein, um eine seitliche Fixierung zu unterstützen. Die Nasenvorsprünge 64 können insbesondere, wie dies die **Fig. 2** zeigt, an Partien der die Längsseiten 2 des Grundrahmens 1 nach unten verlängernden und zugleich die Aufstandsfüße 8,7 bildenden Seiteneckstegen 6 und Seitenflanken 9 ausgebildet sein.

Im Ausführungsbeispiel nach den Fig. 1 bis 4 bildet der Spannabschnitt 40 einen integralen Bestandteil des Korpus 5 der Adapterplatte 10. Die Struktur der Blattfederanordnung 41 mit den Waben 42 ist stoffschlüssig mit dem Plattenabschnitt 31 und mit dem Zwischensteg 15 verbunden und wird beim Urformen der Adapterplatte 10 in einem geeigneten Gussverfahren, insbesondere Spritzgussverfahren, aus Kunststoff erzeugt. Um den Plattenabschnitt 31, der aufgrund der Blattfederanordnung 41 relativ zum Grundrahmen 1 beweglich ist, in vertikaler Richtung innerhalb des Grundrahmens 1 zu führen, sind die Längsseiten 2 im Bereich des beweglichen Koppelelements 30 jeweils mit zwei Längsschlitzen 70 bzw. 71 versehen, und in jeden der Längsschlitze 70, 71 greift ein mit seiner Stiftachse quer zur Längsrichtung stehender Führungsstift 72, 73 ein, der in geeigneter Weise im Plattenabschnitt 31, insbesondere in den äußeren Längsrippen 32 des beweglichen Koppelelements 30, verankert wird. Die Führungsstifte 72, 73 haben ein ausreichend bemessenes, möglichst niedriges Bewegungsspiel innerhalb der zugehörigen Führungsschlitze, damit das bewegliche Koppelelement 30 ausschließlich in Längsrichtung der Adapterplatte 10, also in oder entgegen der Fahrtrichtung bzw. Bewegungsrichtung zum Lösen der Riegelstellung, verschoben bzw. bewegt werden kann.

Fig. 6 zeigt noch einmal die Koppelstellung einer Adapterplatte 10 an den Querholmen 51,52 eines Gepäckträgers 50. Die Adapterplatte 10 bietet ausreichend Freiraum, dass der Gepäckträger 50 mit weiteren Querholme 55 versehen werden kann, um beispielsweise auch eine Federklemme 66 an einem Gepäckträger 50 vorsehen und an diesem Querholme 55 zu können, und aufgrund des großen Abstandes zwischen dem nicht beweglichen Koppelelement 20 und dem beweglichen Koppelelement 30 können insbesondere in der schraffiert dargestellten Fläche weitere Querholme am Gepäckträger angeordnet werden, ohne dass dies die Funktion und das Zusammenwirken zwischen Gepäckträger 50 und Adapterplatte 10 beeinflusst.

Fig. 8 zeigt eine alternative Ausführungsvariante einer erfindungsgemäßen Adapterplatte 110. Funktionsgleiche Bauteile sind mit um 100 erhöhten Bezugszeichen dargestellt. Die Ausgestaltung des Koppelelements 120 mit der Positioniermulde 121 und die Ausgestaltung des Koppelelements 130 mit der Riegelmulde 136 sind identisch wie beim vorherigen Ausführungsbeispiel. Auch hier dient ein Griffteil 145 zum Verschieben des beweglichen Koppelelements 130, welches im Wesentlichen innerhalb des Grundrahmens 101 der Adapterplatte 110 angeordnet ist. Die Spanneinrichtung 140 besteht wie beim vorherigen Ausführungsbeispiel aus einer wabenartigen Blattfederstruktur 141 mit mehreren in die Struktur integrierten geschlossenen, und als Blattfeder dienenden geschlossenen Waben 142, deren Funktionsweise wie bei Tellerfedern ist. Allerdings besteht das gesamte bewegliche Koppelelement 130 aus einem getrennt und unabhängig vom Korpus 105 der Adapterplatte 110 herstellbaren Bauteil 131. Der eigentliche Aufbau des beweglichen Koppelelement 130 ist zwar weitestgehend identisch wie beim vorherigen Ausführungsbeispiel. Allerdings ist die Spanneinrichtung 140 mit dem Zwischensteg 115 lösbar verbunden, im gezeigten Ausführungsbeispiel über eine schwalbenschwanzartige Formschlussmittel-Verbindung. Der Zwischensteg 115 weist hierzu eine schlüssellochartige, stirnseitig zum beweglichen Koppelelement 130 hin geöffnete Vertiefung 190 auf, und die wabenartige Blattfederanordnung 141 weist stirnseitig als Abschlusselement einen passend geformten Eingriffskopf 191 auf, der von der Unterseite der Adapterplatte 110 her in die Vertiefung 190 einschiebbar ist. Die Vertiefung 190 ist dabei vorzugsweise sacklochartig, sodass der Eingriffskopf 191 allenfalls nach unten aus der Vertiefung 190 austreten kann, nicht hingegen zugleich auch nach oben (wobei sich diese Richtungsangaben auf eine Montageposition an einem Gepäckträger beziehen). Beispielsweise über einen Querstift oder über eine Klebverbindung lässt sich eine sichere Verankerung zwischen Eingriffskopf 191 und Vertiefung 190 erzielen. Auch die Adapterplatte 110 hat Führungsschlitze, wie mit dem Führungsschlitz 170 angedeutet, und Führungsstifte 172, die sich jeweils in einem Führungsschlitz 170 führen, damit sich das bewegliche Koppelelement 130 nur parallel zum Grundrahmen 101 bewegen kann. Die Adapterplatte 110 hat auch, wie beim vorherigen Ausführungsbeispiel, Adapterflügel 160 mit hier mehreren in Längsrichtung voneinander beabstandeten Anlagenasen 161. Geringfügig abweichend zum vorherigen Ausführungsbeispiel sind auch hier Nasenvorsprünge 166 für die innere Zentrierung an weiter innen liegenden Längsholmen vorgesehen, diese liegen aber im Abstand zu den Aufstandsfüßen 108 bzw. Längsseiten 102 des Grundrahmens 101. An der Unterseite der Nasenflügel 160 sind zusätzlich noch querverlaufende halbzylindrische Wölbungen 169 ausgebildet, mit denen sich die Adapterplatte 110 an der Oberseite der Längsholme eines Gepäckträgers abstützen kann und Fertigungsabweichungen ausgeglichen werden können

Die Ausgestaltung mit einer integrierten Spanneinrichtung mittels einer nachgiebigen Wabenstruktur bildet ein bevorzugtes Ausführungsbeispiel, die Spanneinrichtung könnte aber auch auf andere Weise aufgebaut sein, gegebenenfalls auch mit einzelnen Zugfedern, wozu dann u.U. das Plattenelement über weitere Führungsschlitze und -Stifte geführt werden muss. Die Spanneinrichtung kann auch an ganz anderen Positionen angeordnet werden, beispielsweise auch zwischen einer der Querseiten und dem beweglichen Koppelelement; sie kann auch aus einer Spiralfeder bestehen, die auf dem Schaft des Griffteils angeordnet ist, wobei dann Griffteil und Koppelelement bewegungsfest miteinander verbunden sein sollten. Die gezeigten Ausführungsbeispiele zeigen ein bewegliches Koppelelement und ein unbewegliches Koppelelement. Grundsätzlich wäre es aber auch möglich, dass beide Koppelelement beweglich sind, um die Spannkraft in der Riegelstellung noch einmal zu erhöhen. Für den Fachmann ergeben sich aus der Beschreibung weitere Varianten. Die Figuren zeigen nur bevorzugte Ausführungsbeispiele, ohne den Schutzbereich zu beschränken.

## Patentansprüche

1. Adaptersystem zum lösbaren Koppeln von Zubehör, wie insbesondere Taschen, Körbe oder Behälter, an einem Längsholme und Querholme aufweisenden Fahrzeug-Gepäckträger, insbesondere einem Fahrradgepäckträger, mit einer vorzugsweise lösbar an dem Zubehör befestigbaren Adapterplatte (10), die ein erstes Koppelelement (20) zum Zusammenwirken mit einem Gepäckträger-Querholm und ein in Längsrichtung der Adapterplatte beabstandet zum ersten Koppelelement angeordnetes zweites Koppelelement (30) zum Zusammenwirken mit einem anderen Gepäckträger-Querholm aufweist, wobei wenigstens eines der Koppelelemente (30) zwischen einer Verriegelungsposition und einer Freigabeposition gegen die Rückstellkraft einer Spanneinrichtung (40) bewegbar ist und beide Koppelelemente ausgelegt sind, die Adapterplatte an einem Fahrzeug-Gepäckträger gegen ungewolltes Entkoppeln zu sichern, wobei eines der Koppelelemente (20) eine Positioniermulde (21) mit Schwenklagerfunktion aufweist und zum partiellen Umfassen eines Gepäckträger-Querholms ausgebildet ist, und das andere Koppelelement(30) mit einer randoffenen Riegelmulde (36) zum partiellen Umfassen eines anderen Gepäckträger-Querholms versehen ist, wobei die Muldenöffnung von Positioniermulde (21) und Riegelmulde (36) schräg zueinander stehen, **dadurch gekennzeichnet, dass** das zwischen einer Verriegelungsposition und einer Freigabeposition gegen die Rückstellkraft einer Spanneinrichtung bewegliche Koppelelement (30) beim Ankoppeln der Adapterplatte am Gepäckträger mittels einer Schwenkbewegung der Adapterplatte durch Zusammenwirken mit einem Querholm in die Freigabeposition verschiebbar ist.

2. Adaptersystem nach Anspruch 1, **dadurch gekennzeichnet, dass** die Muldenöffnung von Positioniermulde (21) und Riegelmulde (36) in einem Winkel zwischen 95° und 175° zueinander stehen, und vorzugsweise in einem Winkel von 140° ± 7°.

3. Adaptersystem nach Anspruch 1 oder 2, **dadurch gekennzeichnet, dass** die Positioniermulde (21) den gekrümmten Grund einer schräg zur Längsrichtung verlaufenden Positioniernut (22) bildet, die mit ihrem gewölbten Grund die Schwenklagerfunktion beim Montagevorgang der Adapterplatte an einem Gepäckträger übernimmt, wobei vorzugsweise die Positioniernut (22) unterschiedlich lange Seitenschenkel (12, 13) aufweist und der näher an der Riegelmulde liegende Seitenschenkel (13) einen Führungsschenkel zum Zusammenwirken mit einem Gepäckträger-Querholm bildet und länger ist als der weiter entfernt von der Riegelmulde liegende Seitenschenkel (12).

4. Adaptersystem nach Anspruch einem der vorhergehenden Ansprüche, **dadurch gekennzeichnet, dass** die Riegelmulde (36) eine halbkreisförmige Muldenöffnung aufweist, die vorzugsweise symmetrisch und parallel zur Längsrichtung ausgerichtet liegt.

5. Adaptersystem nach einem der vorhergehenden Ansprüche, **dadurch gekennzeichnet, dass** die Riegelmulde (36) an einem Nockenvorsprung (38) am zwischen einer Verriegelungsposition und einer Freigabeposition gegen die Rückstellkraft einer Spanneinrichtung beweglichen Koppelelement (30) ausgebildet ist und der Nockenvorsprung (38) unterhalb der Riegelmulde mit einer schräg nach hinten abgewinkelt verlaufenden Stirnkante (38') als selbständige Betätigungsfläche für das bewegliche Koppelelement (30) beim Ankoppeln des Zubehörs versehen ist

6. Adaptersystem nach einem der vorhergehenden Ansprüche, **dadurch gekennzeichnet, dass** die Adapterplatte jeweils wenigstens zwei parallel zueinander verlaufende und seitlich voneinander beabstandete Positioniermulden (21) und zwei parallel zueinander ausgerichtete und seitlich voneinander beabstandete Riegelmulden (36) aufweist, wobei vorzugsweise die Adapterplatte einen Korpus (5) mit einem Grundrahmen aufweist und die Positioniermulden an den Grundrahmen nach unten verlängernden Seitenflanken (9) des Korpus ausgebildet sind, wobei vorzugsweise die Seitenflanken (9) mit ihren Unterkanten ein erstes Paar von Aufstandsfüßen (8) bilden, wobei in Längsrichtung beanstandet von den Seitenflanken am Korpus zwei den Grundrahmen nach unten verlängernde Seiteneckstege (6) als zweites Paar von Aufstandsfüßen (7) ausgebildet sind.

7. Adaptersystem nach einem der vorhergehenden Ansprüche, **dadurch gekennzeichnet, dass** die Adapterplatte (10) einen Korpus mit einem Grundrahmen aufweist und die Spanneinrichtung (40) integraler Bestandteil des Korpus ist, wobei im Grundrahmen ein über die Spanneinrichtung mit dem Grundrahmen verbundener beweglicher Plattenabschnitt (31) ausgebildet ist, welchem das bewegliche Koppelelement zugeordnet ist.

8. Adaptersystem nach Anspruch 7, **dadurch gekennzeichnet, dass** die Spanneinrichtung aus einer in den Korpus der Adapterplatte stoffschlüssig, insbesondere beim Urformen der Adapterplatte angeformten, integrierten nachgiebigen wabenartigen Blattfederstruktur (41) oder Tellerfederanordnung mit vorzugsweise geschlossenen Waben (42) besteht, wobei vorzugsweise die Spanneinrichtung (40) im Bereich der Mitte des Korpus der Adapterplatte angeordnet ist.

9. Adaptersystem nach einem der Ansprüche 1 bis 6, **dadurch gekennzeichnet, dass** die Adapterplatte (110) einen Korpus mit einem Grundrahmen aufweist und ein beweglicher, das bewegliche Koppelelement bildende Plattenabschnitt (131) über die Spanneinrichtung (140) mit dem Grundrahmen oder mit einem Zwischensteg (115) im Grundrahmen (101) verbunden ist, und vorzugsweise durch ineinander passende Formschlussmittel (190, 191) am Grundrahmen oder Zwischensteg einerseits und am Plattenabschnitt (131) andererseits mit dem Grundrahmen verbunden ist und/oder die Spanneinrichtung aus einer in den beweglichen Plattenabschnitt (131) stoffschlüssig, insbesondere beim Urformen des Plattenabschnitts angeformten, integrierten nachgiebigen wabenartigen Blattfederstruktur (141) oder Federanordnung mit geschlossenen Waben (142) besteht, wobei vorzugsweise der Grundrahmen (101) und der bewegliche Plattenabschnitt (131) aus demselben Material bestehen.

10. Adaptersystem nach einem Ansprüche 7 bis 9, **dadurch gekennzeichnet, dass** der Korpus der Adapterplatte am Grundrahmen seitliche Führungsschlitzen (70) aufweist, und der bewegliche Plattenabschnitt mit in die Führungsschlitze einfassenden Führungselementen versehen ist, insbesondere mit Führungsstiften (72), die mit einer Stiftachse quer zur Längsausrichtung der Adapterplatte verlaufen.

11. Adaptersystem nach einem der Ansprüche 6 bis 10, **dadurch gekennzeichnet, dass** der Korpus seitlich des Grundrahmens mit in Längsrichtung sich erstreckenden Flügelabschnitten (60) als Auflageflächen an den Gepäckträger-Längsholmen versehen ist, wobei vorzugsweise jeweils mindestens ein Paar von Nasenvorsprüngen (61) an beiden Flügelabschnitten ausgebildet ist und die einzelnen Nasenvorsprünge (61) eines Paares in Längsrichtung voneinander beabstandet sind, und/oder am Übergang des Grundrahmens (1) in die Flügelabschnitte jeweils wenigstens ein Paar von Anlagenasen (64) ausgebildet ist und die einzelnen Anlagenasen eines Paares in Längsrichtung voneinander beanstandet sind, oder dass an der Unterseite der Flügelabschnitte zusätzlich zu jedem Nasenvorsprung (161) eine Anlagenase (166) ausgebildet ist, wobei vorzugsweise der Abstand zwischen Anlagenase und Nasenvorsprung an die Holmdicke von Gepäckträger-Längsholmen angepasst ist.

12. Adaptersystem nach einem der vorhergehenden Ansprüche, **dadurch gekennzeichnet, dass** dem zwischen einer Verriegelungsposition und einer Freigabeposition gegen die Rückstellkraft einer Spanneinrichtung beweglichen Koppelelement (30) ein Schlossteil (46) zugeordnet ist, wobei vorzugsweise das Schlossteil ein verdrehbares Schließelement mit einem Schließnocken zum Unterfassen und/oder Hinterfassen eines Gepäckträger-Querholms oder eines Abschnitts am Grundrahmen (1) der Adapterplatte aufweist, wobei insbesondere vorzugsweise der Schließnocken und das bewegliche Koppelelement zum Zusammenwirken mit demselben Gepäckträger-Querholm ausgelegt und angeordnet sind.

13. Adaptersystem nach Anspruch einem der vorhergehenden Ansprüche, **dadurch gekennzeichnet, dass** das zwischen einer Verriegelungsposition und einer Freigabeposition gegen die Rückstellkraft einer Spanneinrichtung bewegliche Koppelelement (30) mit einem Griffteil (45) verbunden oder versehen ist, welches stirnseitig in Längsrichtung über den Korpus des Grundrahmens hinausragt, wobei vorzugsweise das Griffteil (45) ein Zugelement für das bewegliche Koppelelement bildet.

14. Adaptersystem nach einem der vorhergehenden Ansprüche, **dadurch gekennzeichnet, dass** das zwischen einer Verriegelungsposition und einer Freigabeposition gegen die Rückstellkraft einer Spanneinrichtung bewegliche Koppelelement längsverschieblich am Korpus der Adapterplatte geführt ist und zwischen dem Grundrahmen und dem beweglichen Koppelelement wenigstens eine Druckfeder als Spanneinrichtung angeordnet ist, wobei vorzugsweise die Druckfeder auf einem Befestigungsschaft geführt ist, mit welchem ein Griffteil mit dem zwischen einer Verriegelungsposition und einer Freigabeposition gegen die Rückstellkraft einer Spanneinrichtung beweglichen Koppelelement bewegungsfest verbunden ist.

15. Adaptersystem nach einem der vorhergehenden Ansprüche, **dadurch gekennzeichnet, dass** die Gepäckträger-Querholme (51, 52) aus Rundstäben bestehen, und/oder dass die Gepäckträger-Längsholme (53) aus Rundstäben bestehen, wobei vorzugsweise die Adapterplatte (10; 110) sowohl an einem ersten Fahrzeug-Gepäckträger mit einem Abstand A zwischen den Gepäckträger-Längsholmen als auch an einem zweiten Fahrzeug-Gepäckträger mit einem Abstand B zwischen den Gepäckträger-Längsholmen ankoppelbar ist und der Abstand B um mehr als 20 mm größer ist als der Abstand A, und vorzugsweise um 24 mm größer ist als der Abstand A.

## Claims

1. An adapter system for detachably coupling accessories, in particular bags, baskets, or containers, to a vehicle luggage rack, in particular a bicycle luggage rack, having longitudinal bars and crossbars, having an adapter plate (10) preferably fastened detachably on the accessories, which plate has a first coupling element (20) for interacting with a luggage rack crossbar and a second coupling element (30) arranged in the longitudinal direction of the adapter plate at a distance from the first coupling element for interacting with another luggage rack crossbar, wherein at least one of the coupling elements (30) is movable between a locking position and a release position against the restoring force of a clamping device (40), and both coupling elements are designed to secure the adapter plate to a vehicle luggage rack against unintended uncoupling, wherein one of the coupling elements (20) has a positioning recess (21) with a pivot bearing function and is formed to partially encompass a luggage rack crossbar, and the other coupling element (30) is provided with an open-edged locking recess (36) for partially encompassing another luggage rack crossbar, wherein the recess opening of the positioning recess (21) and of the locking recess (36) are at an angle to one another, **characterized in that** the coupling element (30) that is movable between a locking position and a release position against the restoring force of a clamping device can be moved into the release position during the coupling of the adapter plate on the luggage rack by means of a pivoting movement of the adapter plate by interacting with a crossbar

2. The adapter system according to claim 1, **characterized in that** the recess opening of the positioning recess (21) and the locking recess (36) form an angle between 95° and 175° with respect to one another, and preferably an angle of 140° ± 7°.

3. The adapter system according to claim 1 or 2, **characterized in that** the positioning recess (21) forms the curved base of a positioning groove (22) extending obliquely to the longitudinal direction, which, with its curved base, serves as the pivot bearing function during the installation process of the adapter plate on a luggage rack, wherein the positioning groove (22) preferably has side legs (12, 13) of different lengths, and the side leg (13) closer to the locking recess forms a guide leg for interacting with a luggage rack crossbar and is longer than the side leg (12) further away from the locking recess.

4. The adapter system according to one of the preceding claims, **characterized in that** the locking recess (36) has a semicircular recess opening that is preferably symmetrical and oriented parallel to the longitudinal direction.

5. The adapter system according to one of the preceding claims, **characterized in that** the locking recess (36) is formed on a cam projection (38) on a coupling element (30) that is movable between a locking position and a release position against the restoring force of a clamping device that is movable between a locking position and a release position against the restoring force of a clamping device, and that the cam projection (38) is provided below the locking recess with a front edge (38') angled obliquely toward the rear, serving as an independent actuating surface for the movable coupling element (30) when coupling the accessories.

6. The adapter system according to one of the preceding claims, **characterized in that** the adapter plate respectively has at least two positioning recesses (21) extending parallel to one another and spaced apart laterally, and two locking recesses (36) oriented in parallel to one another and spaced apart laterally, wherein the adapter plate preferably has a body (5) with a base frame, and the positioning recesses are formed on side flanks (9) of the body that extend downward from the base frame, wherein the side flanks (9) preferably form a first pair of support feet (8) with their lower edges, wherein, in the longitudinal direction, spaced from the side flanks, two side corner webs (6) extending downward from the side flanks on the body toward the base frame are formed as a second pair of support feet (7).

7. The adapter system according to one of the preceding claims, **characterized in that** the adapter plate (10) has a body with a base frame, and the clamping device (40) is an integral part of the body, wherein a movable plate section (31) connected to the base frame via the clamping device is formed in the base frame, with which the movable coupling element is associated.

8. The adapter system according to claim 7, **characterized in that** the clamping device consists of an integrated, flexible honeycomb-like leaf spring structure (41) or a disc spring assembly with preferably closed honeycombs (42), which is integrally formed into the body of the adapter plate by material bonding, in particular during the initial forming of the adapter plate, wherein the clamping device (40) is preferably arranged in the center of the body of the adapter plate.

9. The adapter system according to one of claims 1 to 6, **characterized in that** the adapter plate (110) has a body with a base frame, and a movable plate section (131) forming the movable coupling element is connected to the base frame or to an intermediate web (115) in the base frame (101) via the clamping device (140), and is preferably connected to the base frame by interlocking positive-fit means (190, 191) on the base frame or on intermediate web on the one hand and on the plate section (131) on the other hand, and/or the clamping device consists of an integrated, flexible, honeycomb-like leaf spring structure (141) or spring assembly with closed honeycombs (142), formed integrally with the movable plate section (131), in particular during the initial forming of the plate section, wherein the base frame (101) and the movable plate section (131) preferably consist of the same material.

10. The adapter system according to one of claims 7 to 9, **characterized in that** the body of the adapter plate has lateral guide slots (70) on the base frame, and that the movable plate section is provided with guide elements that engage in the guide slots, in particular with guide pins (72) whose pin axes extend transversely to the longitudinal orientation of the adapter plate.

11. The adapter system according one of claims 6 to 10, **characterized in that** the body is provided, laterally of the base frame, with wing sections (60) extending in the longitudinal direction to serve as contact surfaces on the longitudinal bars of the luggage rack, wherein preferably respectively at least one pair of lug projections (61) is formed on each of the two wing sections, and the individual lug projections (61) of a pair are spaced apart from one another in the longitudinal direction, and/or respectively at least one pair of contact lugs (64) is formed at the transition from the base frame (1) to the wing sections, and the individual contact lugs of a pair are spaced apart from one another in the longitudinal direction, or that on the underside of the wing sections, in addition to each lug projection (161), a fastening lug (166) is formed, wherein the distance between the fastening lug and the lug projection is preferably adapted to the bar thickness of the longitudinal bars of the luggage rack.

12. The adapter system according to one of the preceding claims, **characterized in that** a lock part (46) is associated with the coupling element (30), which is movable between a locking position and a release position against the restoring force of a clamping device, wherein the lock part preferably has a rotatable locking element with a locking cam for engaging beneath and/or behind a luggage rack crossbar or a section of the base frame (1) of the adapter plate, wherein the locking cam and the movable coupling element are in particular designed and arranged to interact with the same luggage rack crossbar.

13. The adapter system according to one of the preceding claims, **characterized in that** the coupling element (30), which is movable between a locking position and a release position against the restoring force of a clamping device, is connected to or provided with a handle (45) that protrudes longitudinally from the front face of the body of the base frame, wherein the handle (45) preferably forms a pulling element for the movable coupling element.

14. The adapter system according to one of the preceding claims, **characterized in that** the coupling element, which is movable between a locking position and a release position against the restoring force of a clamping device, is guided so as to be longitudinally displaceable on the body of the adapter plate, and at least one compression spring is arranged between the base frame and the movable coupling element as a clamping device, wherein the compression spring is preferably guided on a fastening shaft to which a handle is fixedly connected to the coupling element, which is movable between a locking position and a release position against the restoring force of a clamping device.

15. The adapter system according to one of the preceding claims, **characterized in that** the luggage rack crossbars (51, 52) consist of round bars, and/or that the longitudinal bars (53) of the luggage rack consist of round bars, wherein the adapter plate (10; 110) can be coupled both to a first vehicle luggage rack with a distance A between the longitudinal bars of the luggage rack and to a second vehicle luggage rack with a distance B between the longitudinal bars of the luggage rack, and the distance B is more than 20 mm greater than the distance A, and preferably 24 mm greater than the distance A.

## Revendications

1. Système d'adaptateur pour l'accouplement amovible d'un accessoire, tel qu'en particulier des sacs, des paniers ou des contenants, à un porte-bagage de véhicule présentant des barres longitudinales et des barres transversales, en particulier un porte-bagage de vélo, présentant une plaque d'adaptateur (10) pouvant être fixée de préférence de manière amovible à l'accessoire, qui présente un premier élément d'accouplement (20) destiné à coopérer avec une barre transversale de porte-bagage et un second élément d'accouplement (30) agencé à une certaine distance, dans la direction longitudinale de la plaque d'adaptateur, par rapport au premier élément d'accouplement, destiné à coopérer avec une autre barre transversale de porte-bagage, au moins l'un des éléments d'accouplement (30) étant mobile entre une position de verrouillage et une position de libération contre la force de rappel d'un dispositif de serrage (40) et les deux éléments d'accouplement étant conçus pour sécuriser la plaque d'adaptateur sur un porte-bagage de véhicule contre un désaccouplement non souhaité, l'un des éléments d'accouplement (20) présentant un creux de positionnement (21) pourvu d'une fonction de pivot et étant réalisé pour entourer partiellement une barre transversale de porte-bagage et l'autre élément d'accouplement (30) étant pourvu d'un creux de verrouillage (36) à bord ouvert destiné à entourer partiellement une autre barre transversale de porte-bagage, l'ouverture de creux du creux de positionnement (21) et celle du creux de verrouillage (36) étant en biais l'une par rapport à l'autre, **caractérisé en ce que** l'élément d'accouplement (30) mobile entre une position de verrouillage et une position de libération contre la force de rappel d'un dispositif de serrage peut être déplacé dans la position de libération lors de l'accouplement de la plaque d'adaptateur sur le porte-bagage au moyen d'un mouvement pivotant de la plaque d'adaptateur par coopération avec une barre transversale.

2. Système d'adaptateur selon la revendication 1, **caractérisé en ce que** l'ouverture de creux du creux de positionnement (21) et celle du creux de verrouillage (36) forment entre elles un angle entre 95° et 175° et de préférence un angle de 140° ± 7°.

3. Système d'adaptateur selon la revendication 1 ou 2, **caractérisé en ce que** le creux de positionnement (21) forme la base incurvée d'une rainure de positionnement (22) s'étendant en biais par rapport à la direction longitudinale, laquelle rainure assure, avec son fond arqué, la fonction de pivot lors du processus de montage de la plaque d'adaptateur sur un porte-bagage, la rainure de positionnement (22) présentant de préférence des branches latérales (12, 13) de longueur différente et la branche latérale (13) plus proche du creux de verrouillage formant une branche de guidage pour la coopération avec une barre transversale de porte-bagage et étant plus longue que la branche latérale (12) plus éloignée du creux de verrouillage.

4. Système d'adaptateur selon l'une des revendications précédentes, **caractérisé en ce que** le creux de verrouillage (36) présente une ouverture de creux semi-circulaire qui est de préférence orientée de manière symétrique et parallèle à la direction longitudinale.

5. Système d'adaptateur selon l'une des revendications précédentes, **caractérisé en ce que** le creux de verrouillage (36) est réalisé au niveau d'une saillie (38) de came sur l'élément d'accouplement (30) mobile entre une position de verrouillage et une position de libération contre la force de rappel d'un dispositif de serrage et la saillie (38) de came est pourvue d'un bord frontal (38') s'étendant sous le creux de verrouillage de manière inclinée en biais vers l'arrière en tant que surface d'actionnement automatique pour l'élément accouplement (30) mobile lors de l'accouplement de l'accessoire.

6. Système d'adaptateur selon l'une des revendications précédentes, **caractérisé en ce que** la plaque d'adaptateur présente à chaque fois au moins deux creux de positionnement (21) s'étendant parallèlement l'un à l'autre et écartés latéralement l'un de l'autre et deux creux de verrouillage (36) orientés parallèlement l'un à l'autre et écartés latéralement l'un de l'autre, la plaque d'adaptateur présentant de préférence un corps (5) pourvu d'un cadre de base et les creux de positionnement étant réalisés sur des flancs latéraux (9) du corps prolongeant le cadre de base vers le bas, les flancs latéraux (9) formant de préférence avec leur bords inférieurs une première paire de pieds support (8), deux traverses latérales (6) écartées des flancs latéraux dans la direction longitudinale sur le corps et prolongeant le cadre de base vers le bas étant réalisées comme seconde paire de pieds support (7).

7. Système d'adaptateur selon l'une des revendications précédentes, **caractérisé en ce que** la plaque d'adaptateur (10) présente un corps pourvu d'un cadre de base et le dispositif de serrage (40) fait partie intégrante du corps, une section (31) de plaque mobile par l'intermédiaire du dispositif de serrage et reliée au cadre de base étant réalisée dans le cadre de base, laquelle section est associée à l'élément d'accouplement mobile.

8. Système d'adaptateur selon la revendication 7, **caractérisé en ce que** le dispositif de serrage est constitué d'une structure de ressorts à lames (41) ou d'un agencement de ressorts à disques de type alvéolaire, présentant de préférence des alvéoles fermées (42), intégré(e) élastique, moulé(e) par liaison de matière dans le corps de la plaque d'adaptateur, en particulier lors du formage initial de la plaque d'adaptateur, le dispositif de serrage (40) étant de préférence agencé dans la zone du centre du corps de la plaque d'adaptateur.

9. Système d'adaptateur selon l'une des revendications 1 à 6, **caractérisé en ce que** la plaque d'adaptateur (110) présente un corps pourvu d'un cadre de base et une section (131) de plaque mobile, formant l'élément d'accouplement mobile est reliée au cadre de base ou à une traverse intermédiaire (115) dans le cadre de base (101) par l'intermédiaire du dispositif de serrage (140) et est reliée de préférence au cadre de base par des moyens à complémentarité de forme (190, 191) s'adaptant l'un dans l'autre sur le cadre de base ou la traverse intermédiaire d'une part et sur la section (131) de plaque d'autre part et/ou le dispositif de serrage est constitué d'une structure de ressorts à lames (141) ou d'un agencement de ressorts présentant des alvéoles fermées (142), intégré(e) élastique, moulé(e) par liaison matière dans la section (131) de plaque mobile, en particulier lors du formage initial de la section de plaque, le cadre de base (101) et la section (131) de plaque mobile étant de préférence constitués par le même matériau.

10. Système d'adaptateur selon l'une des revendications 7 à 9, **caractérisé en ce que** le corps de la plaque d'adaptateur présente, sur le cadre de base, des fentes de guidage latérales (70) et la section de plaque mobile est pourvue d'éléments de guidage pénétrant dans les fentes de guidage, en particulier de tiges de guidage (72) qui s'étendent avec un axe de tige transversalement par rapport à l'orientation longitudinale de la plaque d'adaptateur.

11. Système adaptateur selon l'une des revendications 6 à 10, **caractérisé en ce que** le corps est pourvu, latéralement par rapport au cadre de base, de sections d'aile (60) s'étendant dans la direction longitudinale en tant que surfaces d'appui sur les barres longitudinales du porte-bagage, à chaque fois au moins une paire de saillies de nez (61) étant de préférence réalisée au niveau des deux sections d'aile et les différentes saillies de nez (61) d'une paire étant écartées l'une de l'autre dans la direction longitudinale et/ou à chaque fois une paire de nez de butée (64) étant formée au niveau de la transition du cadre de base (1) dans les sections d'aile et les différents nez de butée d'une paire étant écartés l'un de l'autre dans la direction longitudinale, ou **en ce qu'**un nez de butée (166) est réalisé au niveau de la face inférieure des sections d'aile en plus de chaque saillie de nez (161), la distance entre les nez de butée et la saillie de nez étant de préférence adaptée à l'épaisseur de barre des barres longitudinales du porte-bagage.

12. Système d'adaptateur selon l'une des revendications précédentes, **caractérisé en ce que** l'élément d'accouplement (30) mobile entre une position de verrouillage et une position de libération contre la force de rappel d'un dispositif de serrage est associé à une pièce de serrure (46), la pièce de serrure présentant de préférence un élément de fermeture rotatif pourvu d'une came de fermeture destinée à passer sous et/ou derrière une barre transversale de porte-bagage ou une section sur le cadre de base (1) de la plaque d'adaptateur, en particulier de préférence la came de fermeture et l'élément d'accouplement mobile étant conçus et agencés pour coopérer avec la même barre transversale de porte-bagage.

13. Système d'adaptateur selon l'une des revendications précédentes, **caractérisé en ce que** l'élément d'accouplement (30) mobile entre une position de verrouillage et une position de libération contre la force de rappel d'un dispositif de serrage est relié à ou pourvu d'une pièce de préhension (45), qui dépasse au niveau de la face frontale dans la direction longitudinale au-delà du corps du cadre de base, la pièce de préhension (45) formant de préférence un élément de traction pour l'élément d'accouplement mobile.

14. Système d'adaptateur selon l'une des revendications précédentes, **caractérisé en ce que** l'élément mobile entre une position de verrouillage et une position de libération contre la force de rappel d'un dispositif de serrage est guidé de manière longitudinalement déplaçable sur le corps de la plaque d'adaptateur et au moins un ressort de compression est agencé comme dispositif de serrage entre le cadre de base et l'élément d'accouplement mobile, le ressort de compression étant de préférence guidé sur une tige de fixation à laquelle est reliée de manière solidaire en mouvement une pièce de préhension présentant l'élément d'accouplement mobile entre une position de verrouillage et une position de libération contre la force de rappel d'un dispositif de serrage.

15. Système d'adaptateur selon l'une des revendications précédentes, **caractérisé en ce que** les barres transversales (51, 52) de porte-bagage sont constituées de barres rondes et/ou **en ce que** les barres longitudinales (53) de porte-bagage sont constituées de barres rondes, la plaque d'adaptateur (10 ; 110, pouvant de préférence être accouplée aussi bien à un premier porte-bagage de véhicule présentant une distance A entre les barres longitudinales de porte-bagage qu'à un second porte-bagage de véhicule présentant une distance B entre les barres longitudinales de porte-bagage et la distance B étant supérieure de plus de 20 mm à la distance A et de préférence supérieure de 24 mm à la distance A.
